# EUROPEAN PATENT APPLICATION

(11) **EP 4 687 264 A1**
(43) Date of publication of application: **04.02.2026**
(21) Application number: 23923202.8
(22) Date of filing: 15.12.2023
(51) Int. Cl.: H02J 7/02, H04R 1/10

(54) **HEADPHONE SYSTEM, HEADPHONE, AND HEADPHONE CHARGER**

(30) Priority: 24.03.2023 JP 2023047756
(71) Applicant: Audio-Technica Corporation, Machida-shi, Tokyo 194-8666 (JP)
(72) Inventor: INUBUSHI, Nao, Machida-shi, Tokyo 194-8666 (JP); MORIMOTO, Yasuyuki, Machida-shi, Tokyo 194-8666 (JP)
(74) Representative: SSM Sandmair
(86) International application number: PCT/JP2023/044996
(87) International publication number: WO 2024/202306

(57) **Abstract**

Provided are a headphone system (1), a headphone (2), and a headphone charger (3) that have a new blinking mode during battery charging. The headphone system includes the headphone, the headphone charger that charges the headphone, and an indicator lamp (39) that blinks and indicates a charging status of at least one of the headphone, the charger, or both the headphone and the charger. The indicator lamp is provided with at least one of the headphone, the headphone charger or both the headphone and the charger. A blinking period includes a first period (T1) during which a luminance of the indicator lamp gradually increases, and a second period (T2) during which the luminance gradually decreases. The first period and the second period are alternately repeated. The duration of the first period is different from the duration of the second period.

## Description

### [Technical Field]

The present invention relates to a headphone system, a headphone, and a headphone charger.

### [Background Art]

A complete wireless headphone (earphone) includes left and right sound emitting units that are not connected by cable. Each sound emitting unit includes a battery that stores power for the own operation.

Each sound emitting unit and a charger include an indicator lamp that blinks during charging of the battery.

A technique relating to a headphone system with the indicator lamp that blinks during battery charging has been proposed (for example, see PTL 1).

Herein, the blinking of the indicator lamp is implemented by alternately repeating gradual increases and gradual decreases in the brightness of light (luminance) emitted from a light source incorporated in the indicator lamp.

The duration of a period during which the luminance gradually increases (hereinafter referred to as "ramp-up time") is equal to the duration of a period during which the luminance gradually decreases (hereinafter referred to as "ramp-down time"). When the duration of the ramp-up time is equal to the duration of the ramp-down time, the blinking of the indicator lamp gives a user an artificial impression. That is, the user does not feel comfortable with the blinking.

### [Citation List]

### [Patent Literature]

[PTL 1] WO2020/017128 A1

### [Summary of Invention]

### [Technical Problem]

The present invention is directed to providing a headphone system, a headphone, and a headphone charger that have a new blinking mode during battery charging.

### [Solution to Problem]

A headphone system according to the present invention includes a headphone, a charger that charges the headphone, and an indicator lamp that blinks and indicates a charging status of at least one of the headphone, the charger, or both the headphone and the charger, in which at least one of the headphone, the charger, or both the headphone and the charger include the indicator lamp, a blinking period includes a first period during which a luminance of the indicator lamp gradually increases and a second period during which the luminance gradually decreases, the first period and the second period are alternately repeated, and the first period has a duration different from a duration of the second period.

### [Advantageous Effects of Invention]

The present invention is able to provide the headphone system, the headphone, and the headphone charger that have a new blinking mode during battery charging.

### [Brief Description of Drawings]

[Fig. 1] Fig. 1 is a perspective view of a headphone system illustrating an embodiment of the headphone system according to the present invention.
[Fig. 2] Fig. 2 is a functional block diagram of the headphone system in Fig. 1.
[Fig. 3] Fig. 3 is a schematic diagram of a control screen of an information processing device to be connected to the headphone system in Fig. 1.
[Fig. 4] Fig. 4 is a graph illustrating a blinking mode of an indicator lamp included in the headphone system in Fig. 1.
[Fig. 5] Fig. 5 is a graph illustrating another blinking mode of the above indicator lamp.

### [Description of Embodiments]

Embodiments of a headphone system (hereinafter referred to as "present system"), a headphone (hereinafter referred to as "present headphone"), and a headphone charger (hereinafter referred to as "present charger") according to the present invention will be described below with reference to the drawings.

The present system includes the present headphone and the present charger. The present system is connected to an information processing device in which a program for the headphone system operates via a communication network.

### First Embodiment of Present System

### Configuration of Present System (1)

The following description is an example in which an indicator lamp included in the present charger blinks while the present headphone is accommodated in the present charger and is being charged.

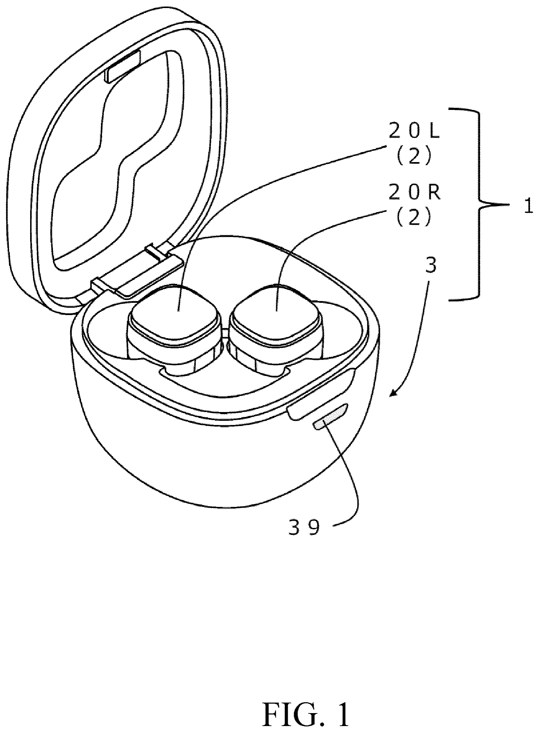

Fig. 1 is a perspective view of the present system illustrating an embodiment of the present system.

The figure illustrates a state in which a headphone 2 (a left sound emitting unit 20L and a right sound emitting unit 20R) included in the present system 1 is accommodated in a charger 3 included in the present system 1. The headphone 2 is an example of the present headphone. The charger 3 is an example of the present charger.

The figure illustrates a state in which a lid of the charger 3 is open.

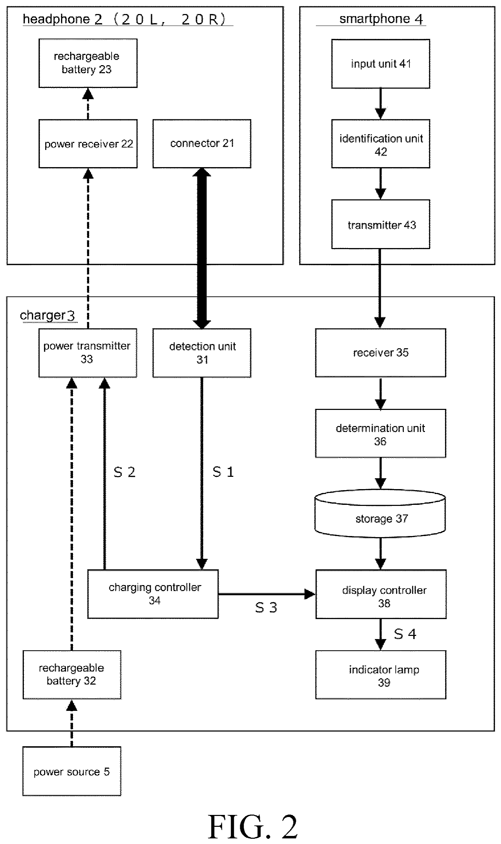

Fig. 2 is a functional block diagram illustrating the embodiment of the present system.

In the figure, the solid arrows indicate signal flow. The dashed arrows indicate power flow. The solid bidirectional arrow indicates an electrical connection.

In the figure, S1 indicates a detection signal. S2 indicates a power supply instruction signal. S3 indicates a blinking instruction signal. S4 indicates a blinking control signal. Details of each signal will be described later.

The headphone 2 outputs a sound wave corresponding to an audio signal from a sound source (not illustrated) such as a portable music player (sound reproducing device). The headphone 2 includes the left sound emitting unit 20L and the right sound emitting unit 20R. Each sound emitting unit (20L, 20R) includes a connector 21, a power receiver 22, and a rechargeable battery 23.

The charger 3 charges the headphone 2. The charger 3 accommodates the headphone 2 (the left sound emitting unit 20L and the right sound emitting unit 20R). When the headphone 2 is accommodated in the charger 3, the headphone 2 is connected to the charger 3. The headphone 2 and the charger 3 are electrically connected (in contact or non-contact). The headphone 2 connected to the charger 3 is charged. The charger 3 includes a detection unit 31, a rechargeable battery 32, a power transmitter 33, a charging controller 34, a receiver 35, a determination unit 36, a storage 37, a display controller 38, and an indicator lamp 39.

A smartphone 4 is an information processing device to be operated by a user of the present system 1 for setting a ramp-up time T1 and a ramp-down time T2 described later. The smartphone 4 is connected to the present system 1 via a communication network. The smartphone 4 includes an input unit 41, an identification unit 42, and a transmitter 43. The smartphone 4 being an information processing device is an example of an external device.

A power supply 5 is a power source for supplying power to the rechargeable battery 32.

### Blinking Mode of Indicator Lamp

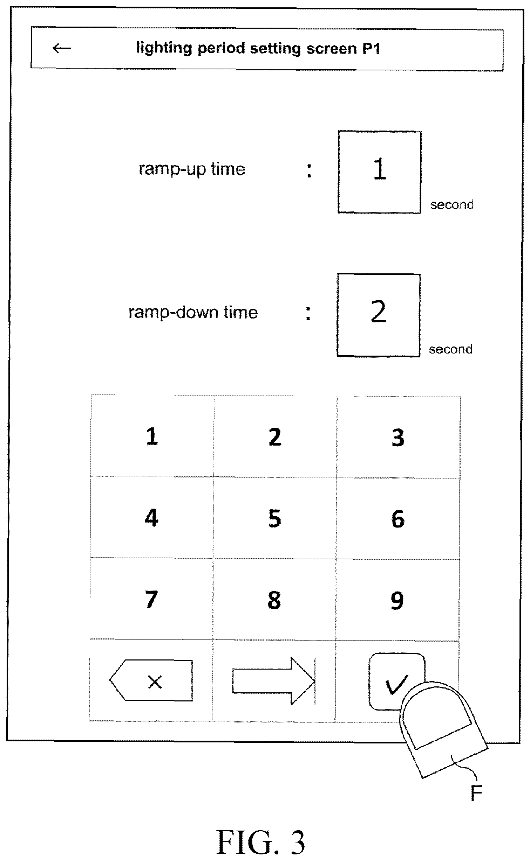

Fig. 3 is a schematic diagram of a control screen of the information processing device to be connected to the present system.

The control screen is a lighting period setting screen P1 in which the ramp-up time T1 and the ramp-down time T2 are input (set) by touch operation with a user's finger F.

The ramp-up time T1 is a period during which the brightness of light (hereinafter referred to as "luminance") emitted from a light source incorporated in the indicator lamp 39 gradually increases. The user inputs the ramp-up time T1 to the lighting period setting screen P1 displayed on the control screen of the smartphone 4 to be connected to the present system 1. The ramp-up time T1 is an example of a first period in the present invention.

The ramp-down time T2 is a period during which the luminance gradually decreases. The user inputs the ramp-down time T2 to the lighting period setting screen P1 displayed on the control screen of the smartphone 4 to be connected to the present system 1. The duration of the ramp-down time T2 differs from the duration of the ramp-up time T1. The ramp-down time T2 is an example of a second period in the present invention.

The figure indicates that "one second" is input as the ramp-up time T1. The figure indicates that "two seconds" is input as the ramp-down time T2.

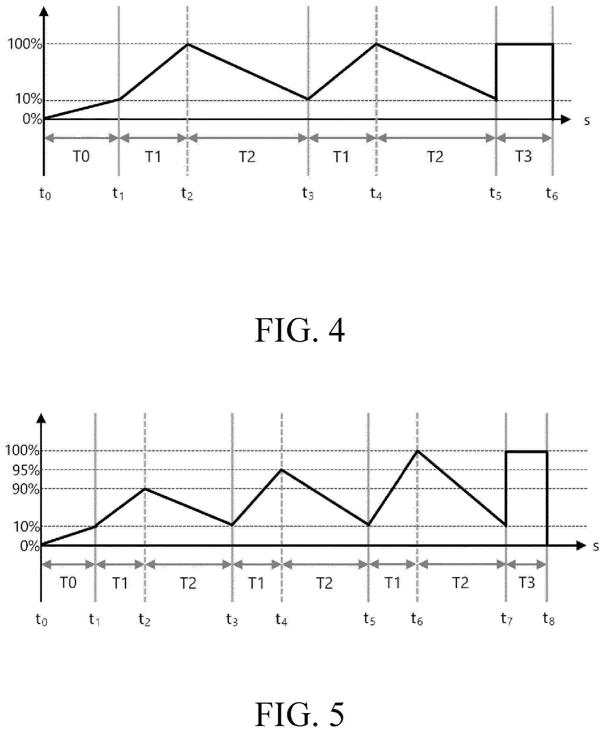

Fig. 4 is a graph illustrating a blinking mode of the indicator lamp included in the present system. In the figure, the vertical axis indicates the percentage (%) of luminance (cd/m²). The horizontal axis indicates an elapsed time (s).

Herein, the luminance percentage is a percentage with respect to the maximum luminance of the indicator lamp 39. That is, "the luminance percentage is 10%" indicates that the luminance of the indicator lamp 39 is 10% of the maximum luminance, for example.

The blinking of the indicator lamp 39 is implemented by alternately repeating gradual increases and gradual decreases of the luminance. That is, one blink of the indicator lamp 39 is composed of one ramp-up time T1 and one ramp-down time T2. That is, the ramp-up time T1 and the ramp-down time T2 are alternately repeated during the blinking period of the indicator lamp 39. In other words, the blinking period of the indicator lamp 39 may include the ramp-up time T1 and the ramp-down time T2.

t₀ is a turned-on time of the indicator lamp 39. The luminance percentage at the turned-on time of the indicator lamp 39 is 0%.

t₁ and t₃ are start times (start points) of the ramp-up time T1. The luminance percentage at the start times of the ramp-up time T1 is 10%.

t₂ and t₄ are start times of the ramp-down time T2. The luminance percentage at the start times of the ramp-down time T2 is 100%.

t₅ is a charging completion time of the headphone 2. The luminance percentage at the charging completion time of the headphone 2 is 10%. When the headphone 2 is fully charged, the blinking of the indicator lamp 39 ends. When the headphone 2 is fully charged, the luminance percentage changes to 100%. The indicator lamp 39 is turned on for a predetermined period T3 from the time t₅ to the time t₆ with the luminance percentage remaining at 100%.

t₆ is a turned-off time of the indicator lamp 39. When the indicator lamp 39 turns off, the luminance percentage changes from 100% to 0%.

T0 is a period from the time t₀ to the time t₁. The luminance percentage gradually increases from 0% to 10% in the predetermined period T0.

T1 is the ramp-up time T1. T1 is each period from the time t₁ to the time t₂ and from the time t₃ to the time t₄. The luminance percentage at the start times of the ramp-up time T1 is 10%. The luminance percentage gradually increases to the end times (end points) of the ramp-up time T1. The luminance percentage at the end times of the ramp-up time T1 is 100%.

T2 is the ramp-down time T2. T2 is each period from the time t₂ to the time t₃ and from the time t₄ to the time t₅. The luminance percentage at the start times of the ramp-down time T2 is 100%. The luminance percentage gradually decreases to the end times of the ramp-down time T2. The luminance percentage at the end times of the ramp-down time T2 is 10%.

T3 is a period from the time t₅ to the time t₆. The luminance percentage is 100% during the predetermined period T3.

### Configuration of Headphone

Referring now back to Fig. 2, a specific configuration of the headphone 2 will be described below.

The left sound emitting unit 20L is worn on the left ear of a user and outputs a sound wave corresponding to an audio signal from a sound source. The left sound emitting unit 20L is accommodated in the charger 3.

The right sound emitting unit 20R is worn on the right ear of the user and outputs the sound wave corresponding to the audio signal from the sound source. The right sound emitting unit 20R is accommodated in the charger 3.

The connector 21 is connected to the detection unit 31. The connector 21 includes a connection terminal (not illustrated) to be connected to a detection terminal (not illustrated) of the detection unit 31. The connection terminal and the detection terminal are electrically connected (in contact or non-contact). The connection terminal of the connector 21 is connected to the detection terminal of the detection unit 31 when the headphone 2 is accommodated in the charger 3.

The power receiver 22 receives power from the power transmitter 33. The power received by the power receiver 22 is supplied to the rechargeable battery 23.

The rechargeable battery 23 receives the power from the power receiver 22. The rechargeable battery 23 stores the power received from the power receiver 22. The headphone 2 is driven by the power stored in the rechargeable battery 23. The rechargeable battery 23 is an example of a rechargeable battery (a battery) included in the headphone in the present invention.

### Configuration of Charger

A specific configuration of the charger 3 will be described below.

The detection unit 31 detects that the headphone 2 is accommodated in the charger 3. The detection unit 31 includes the detection terminal to be connected to the connection terminal of the connector 21. The detection unit 31 periodically transmits the detection signal S1 to the charging controller 34 while the headphone 2 is accommodated in the charger 3, that is, while the detection terminal of the detection unit 31 is connected to the connection terminal of the connector 21.

The rechargeable battery 32 receives power from the power source 5. The rechargeable battery 32 stores the power received from the power source 5. The power stored in the rechargeable battery 32 is supplied to the headphone 2 via the power transmitter 33. The rechargeable battery 32 is an example of a rechargeable battery (a battery) included in the charger in the present invention.

The power transmitter 33 supplies the power stored in the rechargeable battery 32 to the power receiver 22.

The charging controller 34 controls the supply of power from the power transmitter 33 to the power receiver 22. The charging controller 34 receives the detection signal S1 from the detection unit 31. The charging controller 34 periodically transmits the power supply instruction signal S2 to the power transmitter 33 while receiving the detection signal S1. The power supply instruction signal S2 is a signal that instructs the power transmitter 33 to supply the power to the power receiver 22. The charging controller 34 periodically transmits the blinking instruction signal S3 to the display controller 38 while receiving the detection signal S1. The blinking instruction signal S3 is a signal that instructs the display controller 38 to transmit the blinking control signal S4 to the indicator lamp 39. The blinking control signal S4 is a signal that controls the blinking and lighting of the indicator lamp 39.

The receiver 35 receives a setting value of the ramp-up time T1 and a setting value of the ramp-down time T2 (hereinafter simply referred to as "setting value") from the transmitter 43. The receiver 35 is an example of an acquisition unit in the present invention.

The determination unit 36 determines the duration of the ramp-up time T1 and the duration of the ramp-down time T2, based on each setting value.

The storage 37 stores in advance, prior to the charging of the headphone 2, the duration of the ramp-up time T1, the duration of the ramp-down time T2, and the luminance information that are determined by the determination unit 36. The luminance information indicates the luminance percentage for each elapsed time from the start time of each of the ramp-up time T1 and the ramp-down time T2. The luminance information is determined by the determination unit 36, based on the ramp-up time T1 and the ramp-down time T2. That is, for example, when the ramp-up time T1 is "one second", the determination unit 36 determines as the luminance information that the luminance percentage increases by 9% every 0.1 seconds from the start time of the ramp-up time T1.

The display controller 38 controls the blinking of the indicator lamp 39. The display controller 38 receives the blinking instruction signal S3 from the charging controller 34. The display controller 38 periodically transmits the blinking control signal S4 to the indicator lamp 39 while receiving the blinking instruction signal S3.

The display controller 38 acquires the duration of the ramp-up time T1, the duration of the ramp-down time T2, and the luminance information that are stored in the storage 37. The display controller 38 controls the blinking of the indicator lamp 39 by using the duration of the ramp-up time T1, the duration of the ramp-down time T2, and the luminance information. That is, the display controller 38 controls the luminance of the indicator lamp 39 during the blinking period.

The indicator lamp 39 blinks and indicates the charging status (whether charging is in progress) of the rechargeable battery 23 included in the headphone 2. The indicator lamp 39 is a light-emitting diode (LED). The indicator lamp 39 blinks when the rechargeable battery 23 is being charged. The blinking of the indicator lamp 39 is implemented by alternately repeating the ramp-up time T1 and the ramp-down time T2. The indicator lamp 39 turns off when the rechargeable battery 23 is not being charged. The indicator lamp 39 receives the blinking control signal S4 from the display controller 38. The indicator lamp 39 blinks while receiving the blinking control signal S4. That is, the rechargeable battery 23 is being charged while the indicator lamp 39 is receiving the blinking control signal S4.

In this way, the display controller 38 blinks the indicator lamp 39 by using the duration of the ramp-up time T1, the duration of the ramp-down time T2, and the luminance information that are stored in the storage 37. In other words, the indicator lamp 39 blinks based on the duration of the ramp-up time T1, the duration of the ramp-down time T2, and the luminance information that are stored in the storage 37.

The indicator lamp 39 is turned on from the charging start time of the headphone 2 for the predetermined period (T0) and from the charging completion time of the headphone 2 for the predetermined period (T3). The indicator lamp 39 turns off when the predetermined period (T3) has elapsed from the charging completion time of the headphone 2.

### Configuration of Information Processing Device

A specific configuration of the information processing device will be described below.

The input unit 41 enables a user of the present system 1 to input the setting values. The setting values are data to be used by the present system 1 for identifying the ramp-up time T1 and the ramp-down time T2. The input unit 41 is an example of the controller in the present invention.

The setting value is a numerical value (in seconds) of each of the ramp-up time T1 and the ramp-down time T2. The user inputs any numerical value (in seconds) as the setting value. The user inputs, for example, "one second" as the duration of the ramp-up time T1. The user inputs, for example, "two seconds" as the duration of the ramp-down time T2.

Herein, the setting value may be a ratio value of the ramp-down time T2 to the ramp-up time T1. That is, the user inputs, as the setting value, a ratio value of the ramp-down time T2 to the ramp-up time T1. The ratio value of the ramp-down time T2 to the ramp-up time T1 is "two", for example. Herein, the case in which the ratio value of the ramp-down time T2 to the ramp-up time T1 is "two" indicates that the duration of the ramp-down time T2 is two times the duration of the ramp-up time T1. That is, the storage 37 stores "one second" in advance as the duration of the ramp-up time T1, for example. The determination unit 36 determines "two seconds" as the duration of the ramp-down time T2 by using the duration "one second" of the ramp-up time T1 stored in the storage 37 and the ratio value "two" of the ramp-down time T2 to the ramp-up time T1 input by the user.

The setting value may be a cycle consisting of the ramp-up time T1 and the ramp-down time T2, i.e., the sum of the duration of one ramp-up time T1 and the duration of one ramp-down time T2 (in seconds). That is, the user inputs the cycle as the setting value. The cycle is "three seconds", for example. Herein, the storage 37 stores in advance "one second" as the duration of the ramp-up time T1, or "two" as the ratio value of the ramp-down time T2 to the ramp-up time T1. The determination unit 36 determines "two seconds" as the duration of the ramp-down time T2 by using the duration "one second" of the ramp-up time T1 or the ratio value "two" of the ramp-down time T2 to the ramp-up time T1, which are stored in the storage 37, and the cycle "three seconds" input by the user.

The setting value may be a combination of the numerical value (in seconds) and the ratio value. That is, the user inputs "one second" as the duration of the ramp-up time T1, and "two" as the ratio value of the ramp-down time T2 to the ramp-up time T1, for example.

Among the setting values, either value of the ramp-up time T1 or the ramp-down time T2 may be fixed. That is, for example when the duration of the ramp-up time T1 is fixed to "one second", the user inputs only the duration of the ramp-down time T2.

The setting value may be at least one of the ramp-up time T1 or the ramp-down time T2. That is, the user inputs only the ramp-up time T1 as the setting value, for example. The ramp-down time T2 not input by the user is determined to a predetermined value by the determination unit 36, based on the ramp-up time T1.

The setting value need not be input by the user. That is, a fixed value of the duration of the ramp-up time T1 and a fixed value of the duration of the ramp-down time T2 may be stored in the storage 37 in advance. The fixed value of the duration of the ramp-up time T1 is "one second", for example. The fixed value of the duration of the ramp-down time T2 is "two seconds", for example.

The identification unit 42 identifies the setting values, based on an input operation to the input unit 41.

The transmitter 43 transmits the setting values identified by the identification unit 42 to the receiver 35.

### Operation of Present System (1) during Charging

The operations of the present system 1 during charging will be described below.

Herein, it is assumed that the present system 1 has already determined the data required for blinking the indicator lamp 39 during the charging of the headphone 2. That is, in the following description, the duration of the ramp-up time T1, the duration of the ramp-down time T2, and the luminance information are already determined and stored in the storage 37. That is, the timing when the duration of the ramp-up time T1, the duration of the ramp-down time T2, and the luminance information are stored in the storage 37 is prior to the timing when the charging of the headphone 2 starts.

First, the headphone 2 (the left sound emitting unit 20L, the right sound emitting unit 20R) is accommodated in the charger 3.

Then, the headphone 2 accommodated in the charger 3 is connected to the charger 3.

Then, the detection unit 31 detects that the headphone 2 has been connected to the charger 3.

Then, the detection unit 31 that has detected the connection between the headphone 2 and the charger 3 starts periodically transmitting the detection signal S1 to the charging controller 34.

Then, the charging controller 34 that has received the detection signal S1 starts transmitting the power supply instruction signal S2 to the power transmitter 33. The charging controller 34 that has received the detection signal S1 starts transmitting the blinking instruction signal S3 to the display controller 38. The transmission of each signal (S2, S3) from the charging controller 34 is periodically executed while the charging controller 34 is receiving the detection signal S1.

Herein, the charging of the headphone 2 and the blinking of the indicator lamp 39 when each signal (S2, S3) is transmitted will be described below.

### Charging of Headphone

The power transmitter 33 that has received the power supply instruction signal S2 supplies the power stored in the rechargeable battery 32 to the power receiver 22.

Then, the power received by the power receiver 22 is supplied to the rechargeable battery 23.

Then, the power supplied to the rechargeable battery 23 is stored in the rechargeable battery 23. The headphone 2 (20L, 20R) is charged while the power is being stored in the rechargeable battery 23.

### Blinking of Indicator Lamp

The display controller 38 that has received the blinking instruction signal S3 transmits the blinking control signal S4 to the indicator lamp 39, based on the duration of the ramp-up time T1, the duration of the ramp-down time T2, and the luminance information that are stored in the storage 37. That is, the display controller 38 transmits the blinking control signal S4 including the information indicating the luminance of the indicator lamp 39 to the indicator lamp 39, based on the elapsed time from the start time of the ramp-up time T1 or ramp-down time T2 and the luminance information.

During the ramp-up time T1 and the ramp-down time T2, the indicator lamp 39 that periodically receives the blinking control signal S4 emits light with the luminance, based on the information indicating the luminance included in the received blinking control signal S4. During the ramp-up time T1 and the ramp-down time T2, the luminance of the light emitted by the indicator lamp 39 changes gradually increasing or gradually decreasing. In this way, the luminance of the light emitted by the indicator lamp 39 gradually increases or gradually decrease, thereby implementing the blinking of the indicator lamp 39.

### Relation between Charging of Headphone and Blinking of Indicator Lamp

Referring now back to Fig. 4, the following description is an example of the charging of the headphone 2 from the start to the completion. The following description is an example of the case where the headphone 2 is fully charged after the ramp-up time T1 and the ramp-down time T2 are alternately repeated two times.

First, when the headphone 2 starts to be charged, the indicator lamp 39 is turned on during a predetermined period T0 from the time t₀ to the time t₁. The luminance percentage changes from 0% at the time t₀ to 10% at the time t₁.

Then, the luminance percentage gradually increases from 10% to 100% during the predetermined period T1 from the time t₁ to the time t₂, i.e., the first ramp-up time T1.

Then, the luminance percentage gradually decreases from 100% to 10% during the predetermined period T2 from the time t₂ to the time t₃, i.e., the first ramp-down time T2.

Then, the luminance percentage gradually increases from 10% to 100% during the predetermined period T1 from the time t₃ to the time t₄, i.e., the second ramp-up time T1.

Then, the luminance percentage gradually decreases from 100% to 10% during the predetermined period T2 from the time t₄ to the time t₅, i.e., the second ramp-down time T2.

Then, when the headphone 2 is fully charged, the luminance percentage changes to 100%. Herein, the present system 1 includes means (not illustrated) that detects that the charging of the headphone 2 is completed, that is, the rechargeable battery 23 is in a so-called fully charged state. When the fully charged state of the rechargeable battery 23 is detected, the charging controller 34 stops transmitting the power supply instruction signal S2 to the power transmitter 33 and transmits, to the display controller 38, a signal indicating that the rechargeable battery 23 is fully charged. The display controller 38 changes the luminance percentage of the indicator lamp 39 to 100% when receiving the signal indicating that the rechargeable battery 23 is fully charged.

Then, the indicator lamp 39 is turned on during the predetermined period T3 from the time t₅ to the time t₆ with the luminance percentage remaining at 100%.

Then, the indicator lamp 39 turns off. The luminance percentage changes from 100% to 0%. The user is able to know that the charging of the headphone 2 is completed (the rechargeable battery 23 is fully charged) due to the fact that the blinking indicator lamp 39 has turned off.

### Conclusion (1)

As described above, the present system 1 includes the headphone 2, the charger 3, and the indicator lamp 39. The indicator lamp 39 blinks and indicates (notifies) the charging status of the headphone 2. That is, a user visually recognizing the blinking of the indicator lamp 39 is able to know that the headphone 2 is being charged. The blinking period includes the ramp-up time T1 that is a period during which the luminance gradually increases and the ramp-down time T2 that is a period during which the luminance gradually decreases. The ramp-up time T1 and the ramp-down time T2 are alternately repeated. The duration of the ramp-up time T1 differs from the duration of the ramp-down time T2. As a result, the blinking of the indicator lamp 39 does not give a user the same artificial impression as when the duration of the ramp-up time T1 and the duration of the ramp-down time T2 are equal.

As described above, the indicator lamp 39 is turned on at the start time of the ramp-up time T1 and the end time of the ramp-down time T2. The luminance percentage at the start time of the ramp-up time T1 and the end time of the ramp-down time T2 is 10%. That is, the indicator lamp 39 does not turn off while the indicator lamp 39 is blinking, i.e., the luminance percentage does not reach 0%.

In the above description, the luminance percentage at the start time of the ramp-up time T1 and the end time of the ramp-down time T2 is 10%. However, the luminance percentage at the above times (at the above start time and end time) in the present invention is not limited to 10%. That is, the luminance percentage at the above times in the present invention may be between 5% and 15% of the luminance percentage at the end time of the first period and at the start time of the second period, for example. Note that the luminance percentage at the above times is stored in the storage in advance, and the display controller controls the blinking of the indicator lamp by using the luminance information (e.g., 10%) stored in the storage.

Note that the above description is an example of the case where the charging completion time of the headphone 2 coincides with the end time of the ramp-down time T2. However, in the present invention, the charging completion time of the present headphone does not necessarily coincide with the end time of the second period. That is, the charging completion time of the present headphone in the present invention may be any time within the first period or second period. That is, the luminance percentage at the charging completion time of the present headphone ranges from 10% to 100%.

### Second Embodiment of Present System

A second embodiment of the present system described below will be described with a focus on differences from the first embodiment of the present system described above.

The second embodiment differs from the first embodiment in that the maximum value (%) of the luminance percentage for each cycle consisting of the ramp-up time T1 and the ramp-down time T2 (hereinafter referred to as "maximum luminance value") gradually increases during the blinking period, while the maximum luminance value is constant (100%) during the blinking period in the first embodiment.

### Configuration of Present System (2)

Fig. 5 is a graph illustrating another blinking mode of the indicator lamp included in the present system. In the figure, the vertical axis indicates the luminance percentage. The horizontal axis indicates the elapsed time.

t₀ is a charging start time of the headphone 2. The indicator lamp 39 turns on at the time t₀. The luminance percentage at the charging start time of the headphone 2 is 0%.

t₁, t₃, and t₃ are start times of the ramp-up time T1. The luminance percentage at the start times of the ramp-up time T1 is 10%.

t₂, t₄, and t₆ are start times of the ramp-down time T2. The luminance percentage at the start times of the ramp-down time T2 is 90% at t₂, 95% at t₄, and 100% at t₆.

t₇ is a charging completion time of the headphone 2. The luminance percentage at the charging completion time of the headphone 2 is 10%. When the headphone 2 is fully charged, the blinking of the indicator lamp 39 ends. When the headphone 2 is fully charged, the luminance percentage changes to 100%. The indicator lamp 39 is turned on during a predetermined period T3 from the time t7 to the time t8 with the luminance percentage remaining at 100%.

t₈ is a turned-off time of the indicator lamp 39. When the indicator lamp 39 turns off, the luminance percentage changes from 100% to 0%.

T0 is a period from the time t₀ to the time t₁. The luminance percentage gradually increases from 0% to 10% during the predetermined period T0.

T1 is the ramp-up time T1. T1 is each period from the time t₁ to the time t₂, from the time t₃ to the time t₄, and from the time t₅ to the time t₆. The luminance percentage at the start times of the ramp-up time T1 is 10%. The luminance gradually increases to the end times of the ramp-up time T1. The luminance percentage at the end times of the ramp-up time T1 increases every time one blinking cycle consisting of the ramp-up time T1 and the ramp-down time T2 of the indicator lamp 39 is repeated. That is, each luminance percentage at the end times of the ramp-up time T1 varies depending on the number of times that the blinking cycle (the ramp-up time T1 and the ramp-down time T2) of the indicator lamp 39 is repeated.

T2 is the ramp-down time T2. T2 is each period from the time t₂ to the time t₃, from the time t₄ to the time t₅, and from the time t₆ to the time t₇. The luminance percentage at the start times of the ramp-down time T2 varies depending on the number of times that the blinking cycle (the ramp-up time T1 and the ramp-down time T2) of the indicator lamp 39 is repeated. The luminance gradually decreases to the end times of the ramp-down time T2. The luminance percentage at the end times of the ramp-down time T2 is 10%.

T3 is a period from the time t₇ to the time t₈. The luminance percentage is 100% during the predetermined period T3.

### Operation of Present System (2)

### Relation between Charging of Headphone and Blinking of Indicator Lamp

The following description is an example of the charging of the headphone 2 from the start to the completion. The following description is an example of the case where the headphone 2 is fully charged after the ramp-up time T1 and the ramp-down time T2 are alternately repeated three times.

First, when the headphone 2 starts to be charged, the indicator lamp 39 is turned on during the predetermined period T0 from the time t₀ to the time t₁. The luminance percentage changes from 0% at the time t₀ to 10% at the time t₁.

Then, the luminance percentage gradually increases from 10% to 90% during the predetermined period T1 from the time t₁ to the time t₂, i.e., the first ramp-up time T1.

Then, the luminance percentage gradually decreases from 90% to 10% during the predetermined period T2 from the time t₂ to the time t₃, i.e., the first ramp-down time T2.

Then, the luminance percentage gradually increases from 10% to 95% during the predetermined period T1 from the time t₃ to the time t₄, i.e., the second ramp-up time T1.

Then, the luminance percentage gradually decreases from 95% to 10% during the predetermined period T2 from the time t₄ to the time t₅, i.e., the second ramp-down time T2.

Then, the luminance percentage gradually increases from 10% to 100% during the predetermined period T1 from the time t₅ to the time t₆, i.e., the third ramp-up time T1.

Then, the luminance percentage gradually decreases from 100% to 10% during the predetermined period T2 from the time t₆ to the time t₅, i.e., the third ramp-down time T2.

Then, when the headphone 2 is fully charged, the luminance percentage changes to 100%.

Then, the indicator lamp 39 is turned on during the predetermined period T3 from the time t₇ to the time t₈ with the luminance percentage remaining at 100%.

Then, the indicator lamp 39 turns off. The luminance percentage changes from 100% to 0%.

### Conclusion (2)

As described above, the ramp-up time T1 includes the first ramp-up time T1 in the blinking period and the second ramp-up time T1 in the blinking period, and the luminance percentage of the indicator lamp 39 at the end time t₂ of the first ramp-up time T1 is smaller than the luminance percentage of the indicator lamp 39 at the end time t₄ of the second ramp-up time T1. That is, the indicator lamp 39 indicates the charged amount (the percentage with respect to the fully charged amount) of the headphone 2 with the luminance of the indicator lamp 39 at the end time of the ramp-up time T1.

Note that the above description is an example of the case where the charging completion time of the headphone 2 coincides with the end time of the ramp-down time T2. However, in the present invention, the charging completion time of the present headphone does not necessarily coincide with the end time of the second period. That is, the charging completion time of the present headphone in the present invention may be any time within the first period or second period. The maximum luminance value for each cycle consisting of the first period and the second period gradually increases depending on the number of times that the blinking cycle (the first period and the second period) of the indicator lamp is repeated. The maximum luminance value may be 100% when the blinking cycle of the indicator lamp is repeated. That is, the luminance percentage at the charging completion time of the present headphone ranges from 10% to 100%.

### Conclusion

In the embodiments described above, the charger 3 includes the indicator lamp 39. However, in the present invention, the present headphone may include the indicator lamp instead of the present charger.

In the embodiments described above, the charger 3 includes the receiver 35, the determination unit 36, and the storage 37. However, in the present invention, the present headphone may include the acquisition unit, the determination unit, and the storage instead of the present charger.

In the embodiments described above, the indicator lamp 39 blinks and indicates the charging status (whether charging is in progress) of the battery of the headphone 2. However, the charging status of the battery indicated by the blinking of the indicator lamp in the present invention is not limited to the charging status of the battery of the present headphone. That is, the indicator lamp may blink and indicate the charging status of the battery of the present charger, for example. The indicator lamp may blink and indicate the charging status of each battery of the present headphone and the present charger. The present system may include switching means for switching the object to be indicated by blinking of the indicator lamp between the charging status of the battery of the present headphone and the charging status of the battery of the present charger. A user operates the switching means to indicate the charging status of the present headphone or the charging status of the present charger on the indicator lamp.

In the embodiments described above, the indicator lamp 39 blinks and indicates the charging status (the charged amount) of the battery of the headphone 2. The color during the blinking of the indicator lamp 39 does not change. However, the color during the blinking of the indicator lamp in the present invention is not limited to a single color. That is, the color during the blinking of the indicator lamp may include a plurality of colors, for example. The color during the blinking of the indicator lamp may change depending on the charging status of the battery of the present headphone.

In the embodiments described above, the headphone 2 is charged by the charger 3. However, in the present invention, the means to charge the present headphone is not limited to the present charger. That is, the present headphone may be charged by power supply, for example.

In the embodiments described above, the number of indicator lamp 39 is one. However, the number of indicator lamps in the present invention is not limited to one. That is, the number of indicator lamps in the present invention may be multiple (e.g., an indicator lamp indicating the charging status of the present headphone and an indicator lamp indicating the charging status of the present charger), for example.

### Features of Present System, Present Headphone, and Present Charger

The features of the present system, the present headphone, and the present charger described above will be summarized below.

### Features of Present System

The present system (e.g., the headphone system 1) includes a headphone (e.g., the headphone 2), a charger (e.g., the charger 3) that charges the headphone, and an indicator lamp (e.g., the indicator lamp 39) that blinks and indicates a charging status of at least one of the headphone, the charger, or both the headphone and the charger, in which at least one of the headphone, the charger, or both the headphone and the charger include the indicator lamp, a period of the blinking includes a first period (e.g., the ramp-up time T1) during which a luminance of the indicator lamp gradually increases and a second period (e.g., ramp-down time T2) during which the luminance gradually decreases, the first period and the second period are alternately repeated, and the first period has a duration different from a duration of the second period.

The present system may include an acquisition unit (e.g., the receiver 35) that acquires each setting value of the first period and the second period, a determination unit (e.g., the determination unit 36) that determines the duration of the first period and the duration of the second period, based on the setting values, and a storage (e.g., the storage 37) that stores the duration of the first period and the duration of the second period.

In the present system, any one of the headphone or the charger may include the acquisition unit, the determination unit, and the storage.

In the present system, the acquisition unit may acquire the setting value from an external device configured to be operated by a user.

In the present system, the indicator lamp is turned on at a start point of the first period and at an end point of the second period, and the luminance at a start point of the first period and at an end point of the second period may be from 5% to 15% of the luminance at an end point of the first period and at a start point of the second period.

In the present system, the first period includes the first period of a first cycle in the blinking period and the first period of a second cycle in the blinking period, and the luminance of the indicator lamp at an end point of the first period of the first cycle may be smaller than the luminance of the indicator lamp at an end point of the first period of the second cycle.

In the present system, the duration of the first period may be one second, and the duration of the second period may be two seconds.

### Features of Present Headphone

The present headphone includes a rechargeable battery (e.g., the rechargeable battery 23) and an indicator lamp that blinks and indicates a charging status of the rechargeable battery, in which a period of the blinking includes a first period during which a luminance of the indicator lamp gradually increases and a second period during which the luminance gradually decreases, the first period and the second period are alternately repeated, and the first period has a duration different from a duration of the second period. Features of Present Charger

The present charger includes a rechargeable battery (e.g., the rechargeable battery 32) that stores power to be supplied to a headphone, and an indicator lamp that blinks and indicates a charging status of the rechargeable battery, in which a period of the blinking includes a first period during which a luminance of the indicator lamp gradually increases and a second period during which the luminance gradually decreases, the first period and the second period are alternately repeated, and the first period has a duration different from a duration of the second period.

### [Reference Signs List]

1 Headphone system
2 Headphone
20L Left sound emitting unit
20R Right sound emitting unit
21 Connector
22 Power receiver
23 Rechargeable battery
3 Charger
31 Detection unit
32 Rechargeable battery
33 Power transmitter
34 Charging controller
35 Receiver
36 Determination unit
37 Storage
38 Display controller
39 Indicator lamp
4 Smartphone
41 Input unit
42 Identification unit
43 Transmitter
5 Power source
S1 Detection signal
S2 Power supply instruction signal
S3 Blinking instruction signal
S4 Blinking control signal
T1 Ramp-up time
T2 Ramp-down time

## Claims

1. A headphone system (1) comprising:
a headphone (2);
a charger (3) configured to charge the headphone (2); and
an indicator lamp (39) configured to blink and indicate a charging status of at least one of the headphone (2), the charger (3), or both the headphone (2) and the charger (3), wherein
at least one of the headphone (2), the charger (3), or both the headphone (2) and the charger (3) include the indicator lamp (39),
a period of the blinking includes
a first period (T1) during which a luminance of the indicator lamp (39) gradually increases, and
a second period (T2) during which the luminance gradually decreases, the first period (T1) and the second period (T2) are alternately repeated, and
the first period (T1) has a duration different from a duration of the second period (T2).

2. The headphone system (1) according to Claim 1, further comprising:
an acquisition unit (35) configured to acquire each setting value of the first period (T1) and the second period (T2);
a determination unit (36) configured to determine the duration of the first period (T1) and the duration of the second period (T2), based on the each setting value; and
a storage (37) configured to store the duration of the first period (T1) and the duration of the second period (T2).

3. The headphone system (1) according to Claim 2, wherein any one of the headphone (2) or the charger (3) includes the acquisition unit (35), the determination unit (36), and the storage (37).

4. The headphone system (1) according to Claim 2, wherein the acquisition unit (35) acquires the setting value from an external device configured to be operated by a user.

5. The headphone system (1) according to Claim 1, wherein
the indicator lamp (39) is turned on at a start point of the first period (T1) and at an end point of the second period (T2), and
the luminance at a start point of the first period (T1) and at an end point of the second period (T2) is between 5% and 15% of the luminance at an end point of the first period (T1) and at a start point of the second period (T2).

6. The headphone system (1) according to Claim 1, wherein
the first period (T1) includes
the first period (T1) of a first cycle in the blinking period and
the first period (T1) of a second cycle in the blinking period, and
the luminance of the indicator lamp (39) at an end point of the first period (T1) of the first cycle is smaller than the luminance of the indicator lamp (39) at an end point of the first period (T1) of the second cycle.

7. The headphone system (1) according to Claim 1, wherein
the duration of the first period (T1) is one second, and
the duration of the second period (T2) is two seconds.

8. A headphone (2) comprising:
a rechargeable battery (23); and
an indicator lamp (39) configured to blink and indicate a charging status of the rechargeable battery (23), wherein
a period of the blinking includes
a first period (T1) during which a luminance of the indicator lamp (39) gradually increases, and
a second period (T2) during which the luminance gradually decreases, the first period (T1) and the second period (T2) are alternately repeated, and
the first period (T1) has a duration different from a duration of the second period (T2).

9. A headphone charger (3) comprising:
a rechargeable battery (32) configured to store power to be supplied to a headphone (2); and
an indicator lamp (39) configured to blink and indicate a charging status of the rechargeable battery (32), wherein
a period of the blinking includes
a first period (T1) during which a luminance of the indicator lamp (39) gradually increases, and
a second period (T2) during which the luminance gradually decreases, the first period (T1) and the second period (T2) are alternately repeated, and the first period (T1) has a duration different from a duration of the second period (T2).
